# EUROPEAN PATENT APPLICATION

(11) **EP 0 639 036 A2**
(43) Date of publication of application: **15.02.1995**
(21) Application number: 94305805.7
(22) Date of filing: 04.08.1994
(51) Int. Cl.: H04Q 7/38

(54) **Cordless telephone handover system**

(30) Priority: 12.08.1993 GB 9316813
(71) Applicant: MacNamee, Robert Joseph Gerard, Hinxton, Cambridgeshire CB10 1QY (GB)
(72) Inventor: MacNamee, Robert Joseph Gerard, Hinxton, Cambridgeshire CB10 1QY (GB)
(74) Representative: Stone, Patrick

(57) **Abstract**

A cordless telephone system in which a plurality of base-stations (1, 2, 3) provide coverage for handsets (5, 6) over overlapping areas, and transfer means (8, 9, 10, 11) are provided for performing handover from one base-station to another when it is detected that better communication between a handset in use can be established with a base-station alternative to that with which the handset is currently in communication.

## Description

The present invention relates to cordless telephone systems and in particular to such a system comprising more than one base-station and providing for handover of a handset from one base-station to another.

Cordless telephones afford users the capability to make and receive calls within a radius of several tens or hundreds of metres of a radio base-station.

Examples of known cordless telephones comprise a primary station (Base Station or Cordless Fixed Part) connected via a radio link to a secondary station (Handset or Cordless Portable Part).

Two existing public standards for cordless telephone systems are CT2 and DECT.

DECT has 10 radio channels. Each radio channel is time division multiplexed into 12 user channels. There is a total of 120 channels. When the base-station is not transmitting other information, it transmits a reference signal. When a handset and base are in communication they exchange regular and frequent synchronisation and identity information.

CT2 has 40 radio channels. There is one user channel per radio channel. The base-station does not transmit any reference signals so the handset cannot tell in advance which base-station will offer the best quality. When the handset and base-station are in communication they do not exchange synchronisation information, except under fault conditions, and exchange identity information slowly.

Three common configurations of cordless telephone systems are: residential systems, office systems and public access systems.

Known residential systems typically comprise at least one handset and at least one base-station. The or each base-station is connected directly to the telephone network (PSTN). The or each base-station may have more than one handset registered to it, i.e. it may contain identity information for more than one handset. The or each handset may be registered to more than one base-station, i.e. it may contain identity information for more than one base-station. Each base-station is connected to one telephone line and incorporates one radio transceiver.

Known office systems comprise multiple radio base-stations connected to a central switching station. This provides a service for multiple users. Users may make or receive calls anywhere within the aggregate coverage area of the base-stations. When a user travels from the coverage area of one base-station to that of another, the system will handover the call from the original base-station to a destination base-station. This handover is determined by circuitry provided in the central switching station.

Handover, as the term is used herein, means the process of changing the radio base-station or radio channel which a handset is using, without releasing the call.

An object of the present invention is to provide a low cost handover technique especially but not exclusively applicable to residential systems.

According to the present invention there is provided a cordless telephone system having transfer means for performing handover of a handset from one to another of a plurality of base-stations connected to a common interconnection means, the transfer means comprising at each base-station means for acquiring knowledge of the signal quality of a handset with which it is in communication, means for signalling information via the common interconnection means if the acquired signal quality knowledge indicates that improved handset communication may be attainable, means for signalling a response via the common interconnection means, and means enabling handover to be effected if the signalling indicates that another base-station will have more favourable communication with the handset.

More particularly the system in accordance with the present invention comprises a plurality of autonomous base-stations connected to a common line or set of lines. All of the base-stations have equal status and the base-stations are typically located far apart from one another so that their respective coverage areas just overlap.

The invention may be practised in two different ways, one more suited to CT2 systems and one more suited to DECT systems.

In the former case, the means for acquiring knowledge comprises means at the base-station for measuring the signal quality of the handset with which it is in communication, and means enabling a handover to be effected if the response signal indicates more favourable communication between another base-station and the handset.

In a DECT system, the handset constantly monitors the qualities of communication with alternative base-stations and, if appropriate, requests a handover from a base-station offering more favourable communication, this alternative base-station then informing the existing base-station that it will take over the call, thereby to enable the existing base-station to release the call.

Each base-station has amongst other means:
- means for the measurement of the strength of radio signal received from a handset, or means for processing a measurement received from the handset,
- means for deciding whether or not the measured signal quality (at the base station or the handset) is adequate,
- means for the transmission and reception of signalling messages,
- means for the comparison of two values, and
- means for deciding whether or not it should accept handover.

It will thus be appreciated that there are two strategies for initiating handover. In CT2 systems, base-station initiated handover is more appropriate, while in DECT systems handset initiated handover is more appropriate.

In handset originated handover, the handset requests handover from a more advantageous base-station, which alternative base-station sends a "command" message to the original base-station. This command message comprises at least a handset identifier signal.

In base-station initiated handover, when a call is in progress via one of the base-stations, and the quality of the received radio signal falls below a predetermined value, the said base-station will signal a "request" message on the common line or set thereof (common interconnection means).

This said request message preferably comprises two parts, an identifier and a value. The identifier may be either a radio channel number or a handset reference number. The value of the transmitted message is in direct proportion to the magnitude of the quality of the radio signal from the handset.

Each of the other base-stations which detect this request message and which is capable of responding, responds with a message whose value is in proportion to the magnitude of the quality of the radio signal received at that base-station from the handset. The other base-stations will preferably measure the received signal quality only of the entity referred to in the identifier field of the original base-station. Preferably only base-stations with a value of signal quality from the handset greater than that indicated by the original base-station will respond.

The originating base-station then compares the values of handset signal quality received back from the other base-stations with the value of handset signal quality transmitted in the request signal. If any of the received values is greater, the said base-station instructs the handset to begin handover. The base-station which transmitted the highest value of handset signal quality then completes the handover process.

The exact mechanisms for completing the handover process differ in different standards CT2, DECT. However, the mechanisms for executing the handover, once the decision to perform a handover has been taken, are generally known in the field of cordless communications and accordingly are not described. When the handover has been performed, the original base-station may maintain its connection to the common telephone line for a short time after the alternative base-station has also established its connection so as to ensure that there is no gap in the speech signal.

The present invention will now be further explained and described by way of example with reference to the accompanying drawings, in which:-
- Figure 1a: shows a cordless telephone system comprising multiple base-stations connected to a single common telephone line and associated portable handsets;
- Figure 1b: shows a cordless telephone system comprising multiple base-stations connected to multiple telephone lines;
- Figure 2: shows the relevant functional blocks of each base-station;
- Figure 3: shows the composition of a signalling messsage sent from the originating base-station to other base-stations; and
- Figure 4: shows the architecture of a centrally controlled wireless PABX.

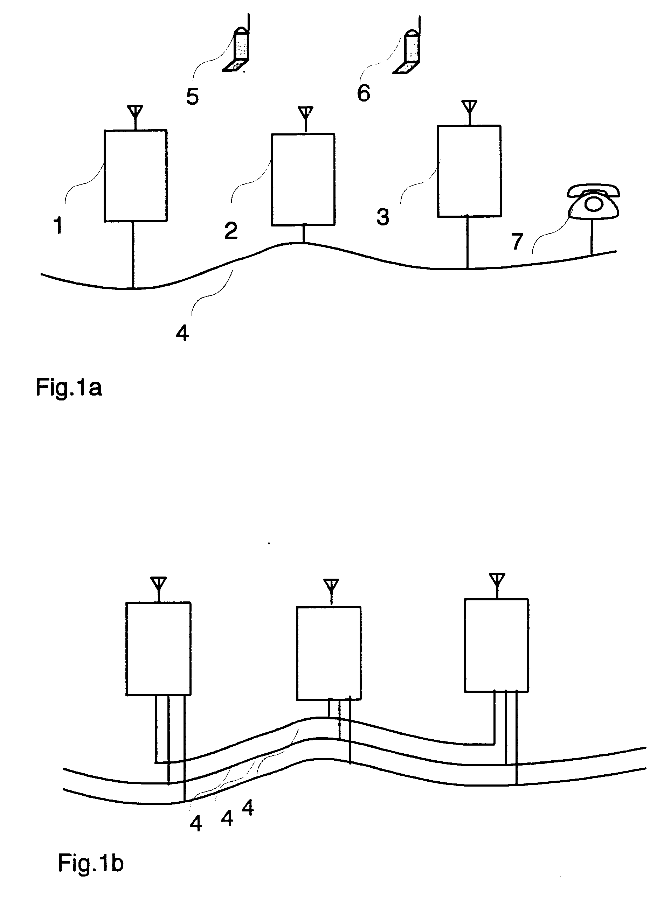

Referring to Figures 1a and 1b, the system comprises a plurality of geographically distributed base-stations 1, 2, 3. Each base-station is connected to at least one common shared telephone line (PSTN) 4. Each base-station is capable of radio communication with portable handsets 5, 6. Reference 7 indicates a fixed telephone on the same line.

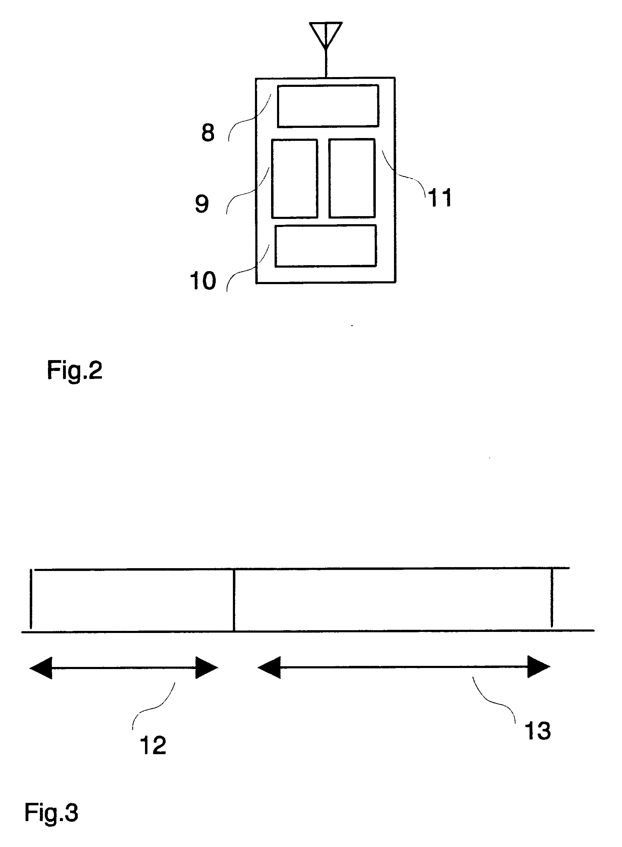

Referring to Figure 2, each base-station comprises means 8 for measuring radio frequency signal quality, e.g. an analogue signal such as signal strength, or means for decoding measurements received from a handset, a controller means 9 for encoding this signal quality into a request signal if the quality value is below a predetermined threshold, means 10 for transmitting and receiving signalling information on the telephone line or lines 4, and means 11 for comparing the originally transmitted radio signal quality with quality values received back on the line or lines 4 from other base-stations, or means 11 for receiving and acting upon command messages received from other base-stations. The base-station also comprises means for performing other functions which are generally known in the field of cordless communication and accordingly are not described or illustrated.

The base-stations may be connected by one or more common lines. Each line may be analogue or digital. The lines may carry signalling or user traffic or both, although some circuits may be reserved for signalling. Some lines or circuits may be connected to the telephone network (PSTN or PABX) and others may be used solely for inter-connecting base-stations.

Possible means for the transmission of the signalling messages include multi-frequency tones, multi-frequency tones shifted in frequency so as to be ultra sonic, or RS232 or HDLC or ISDN digital signalling. The or each telephone line 4 may comprise either two wires (1 analogue circuit) or four wires (2 analogue circuits). Digital lines may support one or more circuit. If the base-stations 1, 2, 3 are connected to a line 4 with four wires then two may be used for the audio voice signal and two used for signalling and synchronisation purposes. If the base-stations 1, 2, 3 are connected to a line 4 with only two wires, then the signalling may be superimposed in common mode on the audio signal. If the base-stations are connected on an ISDN S-bus then the signalling may be carried in the D-channel.

During normal operation a handset user establishes a call via one of the base-stations. If the user begins to travel out of range of the radio base-station, then the radio signal strength and other measures of radio signal quality may fall below an acceptable threshold.

In handset controlled handover systems, when the handset requests handover to an alternative base-station, this alternative station signals the original base-station to inform it that the call will be continued on the alternative base-station, enabling the original base-station to release the call.

In base-station controlled handover, if the radio signal quality falls below an acceptable level, then the base-station sends a request message on the common signalling line to other base-stations.

This message comprises two fields, as indicated in Figure 3. These comprise an identifier field 12 and a value field 13. The identifier field 12 may be configured to refer to either a radio channel number or a handset reference number.

Base-stations which detect this request message then proceed to monitor and measure the radio channel quality of the entity specified in the value field. This is necessary because, in some systems, e.g. CT2, it would otherwise be difficult to monitor the transmissions of a specified handset since handset identity information is not transmitted with each burst.

Any base-stations which measure a better value of measured radio signal quality than that indicated by the originating base-station, then respond with a message containing the measured value of radio signal quality.

The identity field may optionally also contain a reference number for the base-station which transmitted it. The content of the value field 13 is proportional to the quality of the received radio signal.

There are two possible methods for avoiding responses colliding with each other.

According to one method for avoiding response collisions, responses are organised in time slots. Preferably the earliest time slots are reserved for responses with high value of signal quality and the latest timeslots for the weaker values of radio signal quality. If two base-stations do respond with the same radio signal quality value then there is a potential lockup problem. This can be resolved by adding random delay to each base-station's attempt to initiate a handover.

According to the other method of avoiding response collisions, each base-station delays a random period before beginning to monitor the line connecting the base-stations. If there are no other transmissions on the line, the base-station transmits its response. If there are other transmissions on the line, the base-station waits until these are finished, then waits another random interval, and rechecks whether the line is free or not. If when a base-station is waiting for a chance to respond it detects that another base-station is transmitting a quality value higher than it intends to transmit then it will refrain from transmitting.

The originating base-station indicates acceptance of a response by retransmitting that value of radio signal quality given in the response and optionally the identity of the base-station it has chosen to accept the handover. The original base-station then commands the handset to handover to the new base-station.

In both cases, i.e. handset originated and base-station originated handover, the connection to the new base-station may be effected before the original base-station is released.

The new base-station preferably should not request another handover for at least 10 - 20 seconds after a previous handover.

The means and method described above also provide a method for ensuring that when a call is set-up, it is connected to whichever base-station offers the better radio signal quality. When there is an incoming call signal on a common line to the base-stations, each base-station will attempt to call all handsets that it has been configured to call under these circumstances. The handset may "hear" call set-up messages from several base-stations and will respond to either the base-station that it hears first or to the base-station that has the strongest signal strength. Call set-up follows the known procedures and is then, if required, immediately followed by the handover procedure.

Preferably, in order for the method described above to work conveniently for the user, each base-station must contain subscription registration data on each handset that will be permitted to use the system. This is accomplished by using the signalling means to communicate the registration data which it contains to all other base-stations.

Using the method described above, the base-stations may be connected either in parallel or connected to a central switching station means. When all the base-stations are connected in parallel on, e.g. one analogue line, then when there is an incoming call on that line, there is no method of telling which handset the call is intended for and the base-station will cause all handsetsregistered on it to ring. This effectively limits the number of directly addressed users to one per common line. The base-station may be programmed so that only a specified handset "rings" in response to a ringing signal on a specified line. E.g. if there are 6 handsets and 6 lines connected to each base then when there is an incoming call on say line no. 1 only handset no. 1 will ring, or when there is an incoming call on line 4 then only handset no. 4 will ring.

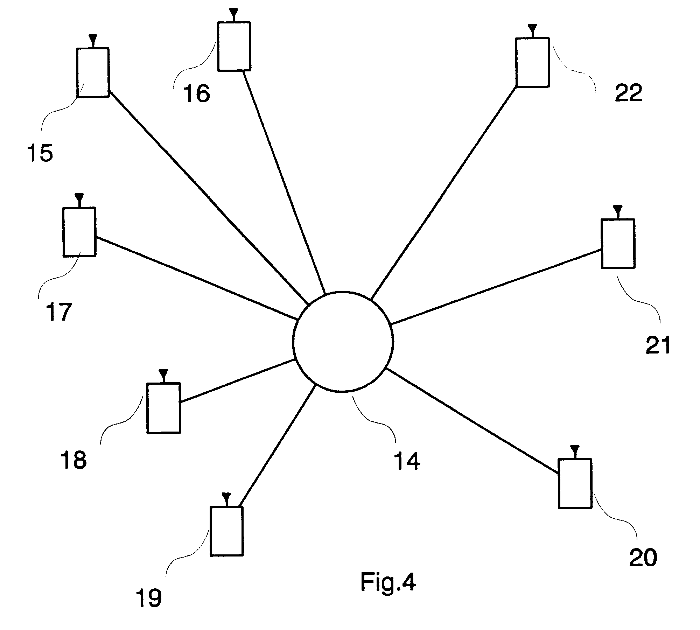

Adding a central switching station, as shown in Figure 4, allows the addition of more incoming telephone lines than lines to each base-station and thus allows more users to the system. The central switching station has one incoming line for each user (or direct dial in facility). When a particular user calls in, the central switching station establishes which cell the called party is currently in and sets up the connection. When the base-stations are connected in parallel on a digital line, this line may permit sub-addressing, thereby to permit more than one user to be addressed directly on a single line.

When the signal quality falls below the acceptable level threshold, the base-station (any of 15 to 22) transmits a message. This message is detected by the central switching station 14. The central switching station 14 re-transmits this message to a number of other base-stations (the others of 15 to 22). These base-stations respond in the above-described manner. The central switching station may then decide which base-station should pick up the call and sends signalling messages to the originating and the destination base-stations. The handover is then executed.

Many cordless telephone standards use time division multiplexing or time division duplexing where handset and base-station communicate with each other on a common radio channel in alternate periods of time. Preferably the radio base-stations will be synchronised so that they all transmit only during the same period of transmission and receive only during the same period of reception. The synchronisation information may be deduced either from the structure of signals transmitted on the radio interface or from a clock signal transmitted on the telephone line. The clock information may be sent common mode on the voice circuit.

The clock information may be suspended intermittently to allow the transmission of signalling information on the same circuit.

If a second handset attempts to set up a call on a second base-station on the same line, then this may be inhibited when the base-station detects the presence of synchronisation clock information on the signalling line.

## Claims

1. A cordless telephone system having transfer means for performing handover of a handset from one to another of a plurality of base-stations connected to a common interconnection means, the transfer means comprising at each base-station means for acquiring knowledge of the signal quality of a handset with which it is in communication, means for signalling information via the common interconnection means if the acquired signal quality knowledge indicates that improved handset communication may be attainable, means for signalling a response via the common interconnection means, and means enabling handover to be effected if the signalling indicates that another base-station will have more favourable communication with the handset.

2. A system according to claim 1, comprising a plurality of autonomous base-stations connected to a common line or set of lines each of which can support multiple circuits.

3. A system according to claim 2, wherein all the base-stations have equal status and the base-stations are typically located far apart from one another so that their respective coverage areas just overlap.

4. A system according to claim 1 or claim 2 or claim 3, wherein, in a CT2 system, the means for acquiring knowledge comprises means at the base-station for measuring the signal quality of the handset with which it is in communication, and means enabling a handover to be effected if the response signal indicates more favourable communication between another base-station and the handset.

5. A system according to claim 1 or claim 2 or claim 3, wherein, in a DECT system, the handset constantly monitors the qualities of communication with alternative base-stations and, if appropriate, requests a handover from a base-station offering more favourable communication, this alternative base-station then informing the existing base-station that it will take over the call, thereby to enable the existing base-station to release the call.

6. A system according to claim 4 or claim 5, wherein each base-station includes
- means for the measurement of the strength of radio signal received from a handset, or means for processing a measurement received from the handset,
- means for deciding whether or not the measured signal quality (at the base-station or the handset) is adequate,
- means for the transmission and reception of signalling messages,
- means for the comparison of two values, and
- means for deciding whether or not it should accept handover.

7. A system according to any of claims 3 to 6, wherein the request message comprises two parts, a handset identifier and a signal quality indicator value.

8. A system according to claim 2 or any claim appendant thereto, wherein a or each line or circuit may be arranged to carry signalling traffic only or voice traffic only.

9. A system according to claim 2 or any claim appendant thereto, wherein, for each base-station, certain lines are connected to the PSTN and other lines are solely for the interconnection of base-stations.

10. A system according to any of claims 1 to 9, having means enabling a call to be transferred to an alternative base-station before the telephone connection to the original base-station is released.

11. A system according to any of claims 1 to 10, wherein the subscription registration data is automatically exchanged between the base-stations using the signalling means.

12. A system according to any of claims 1 to 11, wherein the base-station may be programmed so that only a specified handset rings in response to a ringing signal on a specified line.
